# FASCICULE DE BREVET EUROPEEN

(11) **EP 1 846 189 B1**
(45) Date de publication et mention de la délivrance du brevet: **18.01.2012**
(21) Numéro de dépôt: 06709289.0
(22) Date de dépôt: 10.02.2006
(51) Int. Cl.: B23H 7/08

(54) **FIL COMPOSITE POUR ELECTROEROSION**
VERBUNDSTOFFDRAHT FÜR FUNKENEROSION
COMPOSITE WIRE FOR ELECTRICAL DISCHARGE MACHINING

(30) Priorité: 11.02.2005 FR 0501547; 17.08.2005 FR 0508589
(43) Date de publication de la demande: 24.10.2007
(73) Titulaire: THERMOCOMPACT, 74370 Metz Tessy (FR)
(72) Inventeur: BLANC, Patrick, F-74600 SEYNOD (FR); LY, Michel, F-74000 Annecy (FR); SANCHEZ, Gérald, F-74000 Annecy (FR)
(74) Mandataire: Poncet, Jean-François
(86) Numéro de dépôt international: PCT/FR2006/000304
(87) Numéro de publication internationale: WO 2006/085006

(56) Documents cités:
- EP-A- 0 733 431
- EP-A- 0 930 131
- US-A- 4 977 303
- US-A- 5 945 010
- US-A1- 2002 092 831
- US-A1- 2003 057 189
- PATENT ABSTRACTS OF JAPAN vol. 2002, no. 09, 4 septembre 2002 (2002-09-04) & JP 2002 126950 A (SUMITOMO METAL MINING CO LTD; SUMITOMO KINZOKU KOZAN SHINDO KK), 8 mai 2002 (2002-05-08)

## Description

### DOMAINE TECHNIQUE DE L'INVENTION

La présente invention concerne les fils électrodes utilisés pour couper des métaux ou des matériaux conducteurs d'électricité, par électroérosion dans une machine à électroérosion.

La plupart des machines d'électroérosion modernes sont conçues pour utiliser des fils de laiton nu, généralement de 0,25 mm de diamètre, et de charge à rupture comprise entre 400 et 1 000 N/mm².

Les fils pour électroérosion doivent être conducteurs de l'électricité. Ils agissent par décharge électrique érosive entre le fil et une pièce conductrice à usiner, dans un milieu diélectrique contrôlé à base d'eau.

L'obtention d'une précision d'usinage, notamment la réalisation de découpes d'angle à faible rayon, nécessite d'utiliser des fils de petit diamètre et supportant une grande charge mécanique à la rupture pour être tendus dans la zone d'usinage et limiter l'amplitude des vibrations. On peut alors être tenté d'utiliser un fil dont au moins une portion centrale est en acier, afin d'augmenter la charge à la rupture.

L'usinage par électroérosion étant un procédé relativement lent, il y a simultanément un besoin pour maximiser la vitesse d'usinage, notamment la vitesse d'usinage en ébauche. Dans la présente demande de brevet, la vitesse d'usinage d'ébauche est évaluée en mm²/min, c'est-à-dire en vitesse d'accroissement d'une surface tranchée, ou en mm/min à hauteur donnée de pièce, c'est-à-dire en vitesse de pénétration du fil dans la pièce. On comprend que cette vitesse dépend directement de l'énergie d'étincelage dégagée dans la zone d'usinage entre le fil et la pièce à usiner, et dépend donc de l'énergie électrique que peut conduire le fil jusqu'à la zone d'usinage. Mais les décharges érosives dans la zone d'usinage, et l'effet Joule produit par le courant électrique traversant le fil, tendent à échauffer le fil.

Une des limites des fils pour électroérosion est qu'ils se rompent sous l'effet combiné de l'échauffement et de la tension mécanique. Cela contraint les utilisateurs à limiter la puissance d'usinage de leurs machines d'érosion, en particulier lorsque les conditions de refroidissement du fil ne sont pas bonnes, par exemple en usinage conique, ou en usinage de pièces de grande hauteur.

La solution la plus simple pour éviter les ruptures consiste à utiliser des fils de gros diamètre, par exemple de 0,30 mm et plus. Mais cela limite le rayon minimum des angles rentrants que l'on peut usiner.

On a déjà proposé d'utiliser des fils revêtus de zinc, l'effet du revêtement étant d'augmenter la vitesse d'usinage par rapport à celle d'un fil de laiton nu. Mais la couche de zinc pur s'use très rapidement, et ne protège pas l'âme du fil pendant une durée suffisante pour la découpe de pièces hautes.

On a proposé de recouvrir une âme de fil avec une couche de laiton en phase β, c'est-à-dire un laiton contenant environ 47 % de zinc, évitant l'inconvénient d'une usure trop rapide d'une couche superficielle de zinc pur. Les performances de coupe peuvent être ainsi améliorées.

Le document US 4,977,303 décrit d'une part un procédé pour réaliser un fil électrode, et décrit d'autre part un fil électrode à structure particulière.

Le procédé décrit et revendiqué dans ce document consiste à prévoir une âme métallique, par exemple en cuivre, à la recouvrir d'une couche d'épaisseur donnée (13 à 15 µm) d'un métal volatil tel que le zinc, à chauffer l'ensemble sous atmosphère oxydante à plus de 700°C, de préférence à 850°C, pour diffuser le zinc et le cuivre jusqu'à obtenir une couche diffusée dont l'épaisseur est environ trois fois l'épaisseur donnée de la couche initiale de zinc, et de réduire d'au moins 30 % l'épaisseur de la couche diffusée. Les conditions opératoires du procédé décrit conduisent nécessairement, dans la couche diffusée, à une concentration de zinc d'environ 33 %, c'est-à-dire à un alliage cuivre-zinc en phase α, et ayant une épaisseur d'environ 22 µm après réduction de 30 % de l'épaisseur.

Le fil électrode décrit et revendiqué dans ce document comprend une couche superficielle d'oxyde ayant une épaisseur d'environ 1 µm, recouvrant une couche continue d'environ 6 µm en alliage de cuivre et de zinc contenant 58 à 60 % de zinc (c'est-à-dire un alliage cuivre-zinc en phase γ), la concentration de zinc allant ensuite en décroissant en direction de l'âme, jusqu'à une profondeur d'environ 11 µm. Le document ne décrit pas les moyens pour obtenir un tel fil électrode à couche d'alliage cuivre-zinc en phase γ.

Dans le document US 5,945,010, on a proposé plus récemment de recuire un laiton α zingué de manière à produire une couche périphérique en laiton de phase γ, puis de tréfiler l'ébauche ainsi obtenue pour l'amener au diamètre final. Le tréfilage produit une couche superficielle de laiton en phase γ fracturée. Le document indique que la fracturation de la couche superficielle ne nuit pas à la performance de vitesse de coupe. Et le document dissuade de prévoir une couche de laiton en phase β.

Enfin, le document US 6,781,081 (ou US 2003/0057189 A1) montre un fil électrode ayant les caractéristiques du préambule de la revendication 1 et enseigne les bonnes performances d'un fil ayant, sur une âme métallique, une superposition de deux couches continues de laiton, la couche inférieure étant en laiton de phase β, la couche extérieure continue étant en laiton de phase γ. La vitesse d'érosion est alors supérieure à celle de fils ayant seulement une couche de laiton en phase γ ou seulement une couche de laiton en phase β. Mais le document ne décrit pas les moyens à utiliser pour réaliser un tel fil.

### EXPOSE DE L'INVENTION

Il existe encore un besoin d'usiner le plus vite possible pour une intensité d'usinage donnée, et aussi de pouvoir utiliser l'intensité d'usinage la plus élevée possible avec un fil de diamètre donné.

La présente invention résulte de l'observation surprenante selon laquelle, avec un fil pour électroérosion à âme métallique recouverte d'une couche d'alliage, des performances d'électroérosion nettement améliorées peuvent être encore obtenues en prévoyant, sur une âme en cuivre ou en laiton, une couche de revêtement combinant une couche superficielle en laiton en phase γ fracturée et une sous-couche en laiton en phase β. Cette constatation va à l'encontre de l'enseignement du document US 5,945,010, qui ne constate pas d'amélioration de la vitesse de coupe lors de l'utilisation d'une couche superficielle fracturée en laiton en phase γ, et surtout qui dissuade d'utiliser le laiton en phase β.

Ainsi, pour améliorer encore la vitesse d'usinage par électroérosion, la présente invention propose un fil électrode pour usinage par électroérosion, comprenant :
- une âme en cuivre, en alliage de cuivre, ou en laiton,
- un revêtement en laiton,
   dans lequel le revêtement en laiton comprend la superposition :
- d'une sous-couche en laiton en phase β, et
- d'une couche superficielle à structure en laiton en phase γ fracturée qui laisse apparaître du laiton en phase β dans les fractures.

Selon un mode de réalisation avantageux, du laiton en phase β remplit au moins en partie les fractures de la couche superficielle en laiton en phase γ.

La sous-couche en laiton en phase β peut avantageusement être continue, procurant de meilleurs résultats qu'une sous-couche discontinue.

De meilleurs résultats, combinant à la fois une plus grande vitesse d'électroérosion et un bon état de surface de la pièce usinée, sont obtenus en prévoyant que la couche superficielle en laiton en phase γ fracturée a une épaisseur inférieure à 8 % du diamètre du fil, de préférence inférieure à 5 % du diamètre du fil. Au-delà d'une épaisseur de 5 % environ, on constate une dégradation de l'état de surface de la pièce usinée : il apparaît, sur la pièce usinée après finition, des stries parallèles à la direction du fil électrode qui a réalisé l'usinage.

En alternative ou en complément, la sous-couche en laiton en phase β peut avantageusement avoir une épaisseur comprise entre 5 % et 12 % du diamètre du fil.

La production industrielle d'un tel fil électrode est facilitée lorsque l'épaisseur cumulée de la couche superficielle en laiton en phase γ fracturée et de la sous-couche en laiton en phase β est inférieure à 10 % environ du diamètre du fil électrode. Au-delà, on rencontre des risques de rupture du fil en cours de fabrication, lors d'étapes de tréfilage.

Un mode de réalisation avantageux consiste à prévoir une couche superficielle en laiton en phase γ fracturée qui a une épaisseur d'environ 2 % du diamètre du fil, et une sous-couche en laiton en phase β qui a une épaisseur d'environ 6 % du diamètre du fil.

Une augmentation de la vitesse d'électroérosion est encore obtenue en prévoyant que la surface externe de la couche superficielle en laiton en phase γ est suffisamment oxydée, de couleur sombre.

L'inconvénient, dans certaines machines d'usinage par électroérosion, est que l'oxyde peut provoquer des difficultés de touche électrique, ou bien l'usure prématurée des amenées de courant. On pourra ainsi préférer une surface externe de couche superficielle en laiton en phase γ moins oxydée, qui présente encore par exemple un aspect brillant, pouvant réfléchir la lumière, afin d'être compatible avec les machines d'électroérosion qui utilisent cette propriété pour détecter la présence du fil.

En pratique, pour éviter les problèmes de touche électrique et d'usure des amenées de courant, tout en garantissant des performances d'électroérosion améliorées, on pourra préférer un fil électrode dont l'épaisseur moyenne de la couche d'oxyde, mesurée par dissolution sélective, est comprise entre 100 nm et 250 nm environ, de préférence inférieure à 200 nm. La couche d'oxyde est constituée essentiellement d'oxyde de zinc.

On pourra choisir avantageusement une âme en laiton à teneur en zinc inférieure à 40 %, plus avantageusement une âme en laiton à 20 % de zinc.

En alternative, on pourra choisir une âme en cuivre, pour optimiser la conductibilité du fil.

Une augmentation de la vitesse d'électroérosion peut aussi être obtenue en choisissant une âme en alliage CuZn37, à 37 % de zinc, avec l'avantage simultané d'une réduction du coût de production.

Lors de la fabrication d'un tel fil électrode, on pourra trouver avantage à effectuer la diffusion à basse température appliquée à des lots de plusieurs bobines de fil, car on réalise ainsi une économie d'énergie par rapport à un traitement à plus haute température et/ou en ligne.

Ainsi, selon un autre aspect, l'invention propose un procédé économique pour réaliser un tel fil électrode, comprenant les étapes :
a) prévoir une âme en cuivre ou en laiton,
b) recouvrir l'âme d'une couche de zinc par voie électrolytique, pour réaliser une pré-ébauche,
c) éventuellement soumettre la pré-ébauche à un premier tréfilage, pour lisser la surface du fil zingué, et faciliter ainsi le dévidage du fil une fois diffusé,
d) recuire la pré-ébauche tréfilée au four à une température comprise entre 200°C environ et 400°C environ et pendant une durée de 2h à 40h environ, en choisissant la température et la durée de façon à produire, par diffusion entre le zinc de la couche de couverture et le cuivre ou laiton de l'âme, une ébauche ayant une sous-couche en laiton en phase β et une couche superficielle en laiton en phase γ, elle-même étant au moins légèrement oxydée en surface,
e) soumettre l'ébauche ainsi diffusée à un second tréfilage à froid, pour l'amener au diamètre final et de façon à fracturer la couche en laiton en phase γ.

On pourra toutefois fabriquer un tel fil électrode par un traitement thermique en lot à plus basse température et de plus grande durée, tant que les conditions de durée restent compatibles avec les exigences industrielles. A l'inverse, on pourra fabriquer un tel fil électrode par un procédé en ligne, par échauffement du fil à plus haute température (environ 600°C) lors de son défilement.

Au cours du second tréfilage, la phase γ externe se fracture d'abord en blocs uniformément répartis à la surface du fil. Entre ces blocs, il y a des fissures vides. Ensuite, toujours au cours du tréfilage, ces blocs tendent à se regrouper dans la direction longitudinale en laissant la sous-couche en phase β pénétrer entre eux, pour finalement affleurer en certains endroits de la surface du fil.

De préférence, le second tréfilage réalise une réduction de diamètre comprise entre 40 % et 78 % environ. Cela permet de fracturer correctement la couche périphérique de laiton en phase γ.

En complément, on pourra choisir d'effectuer un premier tréfilage réalisant une réduction de diamètre comprise entre 40 % et 60 % environ.

Dans le procédé, l'étape d) de recuit pourra avantageusement s'effectuer au four à une température et pendant une durée choisies de façon que l'épaisseur moyenne de la couche d'oxyde, mesurée par dissolution sélective sur le fil électrode après l'étape e), soit comprise entre 100 nm et 250 nm environ.

Il n'est pas possible d'énumérer simplement toutes les conditions de temps et de températures qui permettent d'obtenir un certain état de diffusion. En effet, la diffusion que l'on réalise pour fabriquer un fil d'électroérosion concerne une couche de zinc externe qui n'est ni plane, ni mince, ni suffisamment épaisse pour constituer un milieu semi-infini. De plus, les chemins thermiques (température variable en fonction du temps) possibles sont très divers.

Pour des opérations de diffusion réalisées dans l'air sur des fils de cuivre ou de laiton CuZn20 zingués conditionnés en bobines de 4 kg, on a pu observer que l'épaisseur e de la couche intermédiaire en phase β croissait en fonction du temps t selon la loi suivante : de/dt = D/e, D étant un coefficient de diffusion dépendant de la température T et de la composition de l'âme du fil, de/dt étant la dérivée de l'épaisseur e par rapport au temps t. Le coefficient D est fonction de la température T selon une loi de type D = D₀e^{-Q/R.T}, D₀ étant un facteur de fréquence exprimée en m²/s, Q étant une énergie d'activation exprimée en J/mol, R étant la constante molaire des gaz parfaits et valant 8.31 J/(mol.K), et T étant la température exprimée en degrés Kelvin.

D₀ et Q dépendent de la nature de l'âme du fil revêtu de zinc. Pour des gammes de température de 620°K à 680°K environ, on pourra choisir D₀ = 4.98 . 10⁻⁴ et Q = 129 500 pour une âme en cuivre, D₀ = 2.46 . 10⁻⁶ et Q = 100 800 pour une âme en laiton CuZn20.

Pour une âme CuZn37, on pourra choisir D₀ = 4.10. 10⁻³, Q = 138 200.

On peut intégrer l'équation différentielle de/dt = D/e par toute méthode connue. A température constante, l'intégration donne la formule simplifiée e = (2D.t)^{½}. L'épaisseur finale de phase β est bien sûr limitée par la quantité de zinc disponible, et selon l'invention on prévoit de laisser un peu de phase γ en surface.

Pour des opérations de diffusion de fils conditionnés en plus grosses bobines, on augmentera avantageusement le temps de traitement, en abaissant la température de palier, pour homogénéiser la température dans la masse des bobines.

C'est ainsi que les inventeurs ont pu obtenir de la phase β entre la phase α de l'âme et la couche externe en phase γ̇, de la manière suivante : prendre un fil comprenant une âme en laiton à 63 % de cuivre et 37 % de zinc, et un revêtement de 3 µm de zinc pur, dont le diamètre extérieur est de 0,46 mm ; traiter thermiquement ce fil pendant 15 heures à 220°C. On observe alors une sous-couche d'environ 2 µm de phase β comprise entre l'âme de laiton en phase α, et une couche externe de 4 µm environ de phase γ.

Les indications ci-dessus permettent à l'homme du métier d'orienter ses choix de conditions de temps et de température - en fait son chemin thermique - en fonction des conditions initiales et des conditions finales souhaitées.

Le fait que la diffusion s'effectue sur un fil exposé à l'oxygène est très important, car sinon, en atmosphère de gaz neutre, ou sous pression réduite, il se produirait une évaporation importante du zinc, et l'épaisseur de phase β restant en fin de diffusion serait bien plus faible.

Si l'on veut oxyder fortement la surface externe de la couche superficielle en laiton en phase γ, on effectuera le recuit à l'air. L'air doit pouvoir diffuser vers la surface du fil plus rapidement que l'oxydation de celle-ci le requiert. Pour cela, on prévoira une pré-ébauche sous forme d'un bobinage peu dense, en panier par exemple, ou bien on utilisera une rampe de montée en température très faible, inférieure à 0.5°C/min, de 0.2°C/min par exemple. En présence d'un bobinage dense, c'est principalement l'extérieur de la bobine qui s'oxyderait tandis que l'intérieur resterait à l'abri de l'oxygène.

Si l'on veut peu oxyder la surface externe de la couche superficielle en laiton en phase γ, on se contentera d'utiliser l'air présent entre les brins de fils. On enfermera pour cela la bobine dans un dispositif étanche ou semi-étanche, tel qu'une fine feuille métallique, par exemple une feuille d'aluminium, enroulée autour de celle-ci. Le dispositif d'emballage doit permettre la dilatation et la contraction des gaz contenus dans l'emballage autour et dans la bobine, au cours du traitement thermique. On limite ainsi l'oxydation par emballage de la pré-ébauche dans une enveloppe étanche ou semi-étanche.

Les conditions de température et de durée de l'étape d'échauffement pour diffusion seront de préférence choisies de façon que l'épaisseur moyenne de la couche d'oxyde, mesurée par dissolution sélective sur le fil électrode après l'étape e), soit comprise entre 100 nm et 250 nm environ.

La solution de dissolution sélective peut être la suivante : 50 ml d'acide acétique une fois molaire dans 200 ml d'eau, à laquelle on ajoute 0,5 ml d'alcool propargylique. La durée d'immersion est d'environ 2 minutes. On mesure la perte de masse M d'une longueur L de fil de diamètre D₁. On suppose que cette perte de masse M est une dissolution de l'oxyde de zinc, dont la masse volumique Mᵥ est d'environ 5 600 kg/m³, pour en déduire l'épaisseur d'oxyde E₀ par la formule E₀ = M/π D₁LMᵥ.

On ne recommande pas la diffusion sous atmosphère neutre ou sous pression réduite, car le zinc s'évapore alors en partie de la surface du fil et forme des poudres. De telles poudres métalliques, très réactives, sont indésirables, et il est pour cela recommandé de procéder à la diffusion dans de l'air.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
- la figure 1 est une vue schématique en perspective d'un fil pour électroérosion selon un mode de réalisation de la présente invention ;
- la figure 2 est une coupe schématique transversale à plus grande échelle du fil d'électroérosion de la figure 1 ;
- la figure 3 est une coupe longitudinale d'un fil d'électroérosion selon un mode de réalisation de l'invention à âme en laiton ; et
- la figure 4 est une coupe transversale d'un fil d'électroérosion selon l'invention à âme de cuivre.

### DESCRIPTION DES MODES DE REALISATION PREFERES

Dans les modes de réalisation illustrés sur les figures, un fil électrode pour usinage par électroérosion 1 comprend une âme 2 en cuivre ou en laiton, revêtue d'un revêtement constitué d'une sous-couche 3 continue en laiton en phase β et d'une couche superficielle 4 à structure en laiton en phase γ fracturée qui laisse apparaître du laiton en phase β dans les fractures.

Dans la présente description et dans les revendications, on désigne par l'expression "laiton en phase β" un alliage de cuivre et de zinc ayant sensiblement 45 % à 49 % de zinc. A température ambiante, cette phase β est ordonnée et plutôt fragile, et on l'appelle habituellement β'. Si l'on dépasse une certaine température, la structure devient désordonnée et on parle alors de phase β. La transition entre les phases β et β' est inévitable, mais produit peu d'effets. En conséquence, par raison de simplicité, ce laiton sera désigné dans la présente description par la seule expression "laiton en phase β".

Dans la description et dans les revendications, l'expression "laiton en phase γ" est utilisée pour désigner un alliage de cuivre et de zinc dans lequel le zinc est présent en proportion d'environ 65 %.

Un "laiton en phase α" pourra avoir une teneur en zinc inférieure à 40 %, par exemple d'environ 35 %, ou même d'environ 20 %.

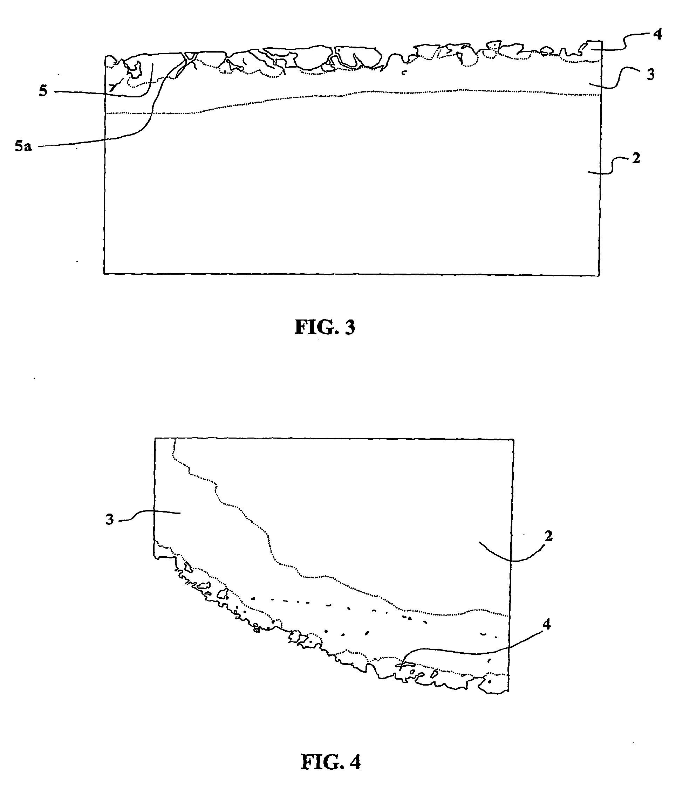

En ce qui concerne la couche superficielle 4, on distingue par exemple (figure 3) une zone 5 en phase γ, bordée de fractures 5a dans lesquelles peut apparaître du laiton en phase β.

Du laiton en phase β peut remplir au moins en partie les fractures 5a de la couche superficielle 4 en laiton en phase γ, assurant une certaine continuité de la surface du fil.

L'effet avantageux d'une telle structure de fil a été démontré par plusieurs essais effectués sur des fils de structures différentes.

### Essai N° 1

Ce premier essai démontre qu'une couche superficielle de laiton en phase γ fracturée réduit l'intensité maximale de courant électrique que peut supporter le fil.

On prévoit pour cela différents fils ayant un même diamètre D₁ de 0,25 mm. On fixe le fil entre deux bornes électriques immergées dans de l'eau déionisée à 20°C. Le fil n'est pas soumis à une tension mécanique. Un générateur de courant électrique est branché aux bornes du dispositif. On augmente l'intensité. électrique jusqu'à la rupture du fil, et on note l'intensité maximale supportée par le fil.

Les résultats figurent dans le tableau ci-après.

| Fil | Intensité maximale supportée |
|---|---|
| Cuivre | 130 A |
| Laiton CuZn 37 | 75 A |
| Laiton CuZn 37 revêtu de 3 µm de zinc pur | 75 A |
| Laiton CuZn 37 revêtu de 3 µm de zinc pur puis diffusé, en phase γ, non fracturée | 75 A |
| Laiton CuZn 37 revêtu de zinc, diffusé à 177°C puis tréfilé pour obtenir une phase γ fracturée | 65 A |

On notera que le dernier fil essayé, à phase γ fracturée sur une âme en laiton, est conforme à l'enseignement du document US 5,945,010 précité.

### Essai N° 2

On a ensuite produit un fil A selon l'invention, ayant 0,25 mm de diamètre D₁, constitué d'une âme 2 de laiton CuZn20 recouverte d'une sous-couche 3 en phase β apparemment non fracturée, et d'une couche superficielle 4 en phase γ visiblement fracturée. Pour cela, on a revêtu un fil de laiton CuZn20, ayant un diamètre de 1,20 mm, par 29 µm de zinc par voie électrolytique. On a tréfilé ce fil jusqu'à un diamètre de 0,827 mm. On a recuit le fil en le passant dans un four pendant deux heures à 400°C, avec des rampes de montée et de descente en température à +/- 1 °C/min, et en atmosphère d'air. Enfin, on a tréfilé le fil ainsi diffusé pour le ramener à un diamètre D₁ de 0,25 mm. La couche de revêtement obtenue sur le fil faisait environ 20 µm d'épaisseur totale. Elle était constituée d'une sous-couche 3 en phase β apparente à la surface du fil en certains endroits, et recouverte à d'autres endroits d'un laiton 4 en phase γ fracturé. Il apparaît ainsi que, lors de l'étape de tréfilage, la sous-couche 3 en laiton en phase β ne se fissure pas d'elle-même lorsqu'on la tréfile.

Ce fil, testé dans les mêmes conditions que les fils précédents au cours de l'essai N° 1, a supporté une intensité maximale de 75 A. Sa charge à la rupture était de 750 N/mm². Il a pu être utilisé avec succès en électroérosion sous une tension mécanique de 17 N.

Cet essai fait apparaître un effet surprenant de la sous-couche 3 en laiton en phase β, qui augmente la capacité du fil à supporter une intensité de courant électrique, et qui ramène cette capacité au niveau de celle des fils dans lesquels la couche superficielle 4 n'est pas fracturée.

### Essai N° 3

On a ensuite produit un fil B de la façon suivante : une âme de laiton CuZn20 de 1,20 mm de diamètre a été revêtue de 29 µm de zinc, puis tréfilée pour l'amener au diamètre D₁ de 0,25 mm. Un recuit de 1h15 à 380°C a été effectué, pour obtenir un fil comportant une sous-couche 3 d'environ 16 µm en phase β et une couche superficielle 4 d'environ 4 µm en phase γ sensiblement non fracturée (car non tréfilée).

Ce fil a supporté une intensité maximale de 75 A. Il a présenté une charge à la rupture de 430 N/mm², et il a pu être utilisé avec succès en électroérosion, avec cependant une tension mécanique réduite à 10 N.

Ainsi, le fil A selon l'invention, réalisé au cours de l'essai N° 2, a présenté une meilleure capacité de tenue mécanique que le fil B de l'essai ci-dessus.

### Essai N° 4

On a ensuite comparé les vitesses d'érosion des fils A et B, dans des conditions adaptées aux deux fils, c'est-à-dire avec une tension mécanique de 10 N.

L'essai a été effectué à l'aide d'une machine Agie AgieCut Evolution Il SFF.

Les conditions étaient : technologie de base estcca25nnn300g230050, adaptée aux fils de laiton zingué de 900 N/mm², buses plaquées sur la pièce. La matière usinée était de l'acier de hauteur 60 mm. La tension mécanique sur le fil était ramenée à 10 N. La vitesse d'électroérosion était : 2,515 mm/min pour le fil A, 2,500 mm/min pour le fil B. Une légère augmentation de la vitesse d'électroérosion a donc été constatée pour le fil A.

Avec la même machine, la même matière et la technologie estccw25nnn300h250050, adaptée aux fils à âme de laiton CuZn20 et couche en phase β, à l'état recuit, la force sur le fil étant de 12 N, on a observé les vitesses maximales suivantes, en augmentant progressivement la valeur du paramètre P à partir de 1 jusqu'à la rupture du fil : 2,79 mm/min pour le fil A (avec P = 27) ; 1,85 mm/min pour le fil B (avec P = 19).

Le fait que le fil A usine plus vite que le fil B est en contradiction avec les données publiées dans le document US 5,945,010.

### Essai N° 5

On a ensuite recherché l'influence de l'épaisseur E₄ de la phase γ fracturée, afin de déterminer un fil ayant une vitesse d'érosion optimale.

Un fil selon l'invention a été obtenu à partir d'une âme de cuivre de 0,9 mm de diamètre. L'âme a été revêtue de zinc, puis tréfilée pour obtenir un fil intermédiaire de 0,422 mm de diamètre dont la couche externe de zinc est épaisse de 16 à 19 µm. Le fil intermédiaire a été porté à différentes températures, pendant des durées variables, de manière à produire des couches externes composées de phases β et γ en différentes proportions. Après les traitements de diffusion, les fils étaient à l'état recuit. Une opération de tréfilage à froid a permis d'obtenir des fils pour électroérosion de 0,25 mm de diamètre D₁ à l'état écroui. La couche superficielle 4 en phase γ était fracturée, tandis que la sous-couche 3 en phase β était restée continue. La couche superficielle 4 en phase γ ne recouvrait pas l'intégralité de la surface des fils, et l'on a noté l'épaisseur E₄ de cette couche superficielle 4 en phase γ là où elle se présentait, ce qui a donné non pas une valeur moyenne de l'épaisseur, mais plutôt une valeur maximale.

Les résultats sont rassemblés dans le tableau ci-après.

| Fil | Conditions de diffusion | Epaisseurs de couches (épaisseur maximale si couche γ) | Vitesse maximale d'érosion en régime E2 H50 | Rupture prématurée en cours d'usinage |
|---|---|---|---|---|
| 1 | 400°C, 2h, +/- 0.5°C/min dans l'air | β 25µm γ 2µm aspect sombre | 4.35 mm/min | Non |
| 2 | 380°C, 3h +/- 0.5°C/min dans l'air | β 18µm γ 5µm aspect sombre | 4.76 mm/min | Non |
| 3 | 380°C, 3h, +/- 0.5°C/min fil abrité de l'air extérieur à la bobine | β 18µm γ 5µm aspect brillant | 4.61 mm/min | Non |
| 4 | 360°C, 2h, +/- 0.5°C/min dans l'air | β 5µm γ 20µm aspect de couleur non uniforme | 4.05 mm/min | Oui |
| 5 | 320°C, 2h, +/-0.5°C/min dans l'air | β 5µm γ 20µm aspect de couleur non uniforme | 3.7 mm/min | Oui |

On constate qu'une couche superficielle 4 en phase γ fracturée, d'épaisseur E₄ trop importante, conduit à des ruptures prématurées du fil en cours d'usinage.

Des essais ci-dessus, on peut déduire que la couche superficielle 4 en laiton en phase γ fracturée a de préférence une épaisseur E₄ inférieure à 8 % du diamètre du fil, plus avantageusement de l'ordre de 2 % du diamètre du fil.

De son côté, la sous-couche 3 continue en laiton en phase β peut avantageusement avoir une épaisseur E₃ comprise entre 5 % et 12 % du diamètre du fil, plus avantageusement voisine de 6 %.

Un bon compromis a été obtenu en prévoyant une couche superficielle 4 en laiton en phase γ fracturée dont l'épaisseur E₄, là où elle est présente, est d'environ 6 µm pour un diamètre de fil de 250 µm (soit un peu plus de 2 % du diamètre), et une sous-couche 3 continue en laiton en phase β dont l'épaisseur E₃ est d'environ 15 µm, soit environ 6 % du diamètre du fil.

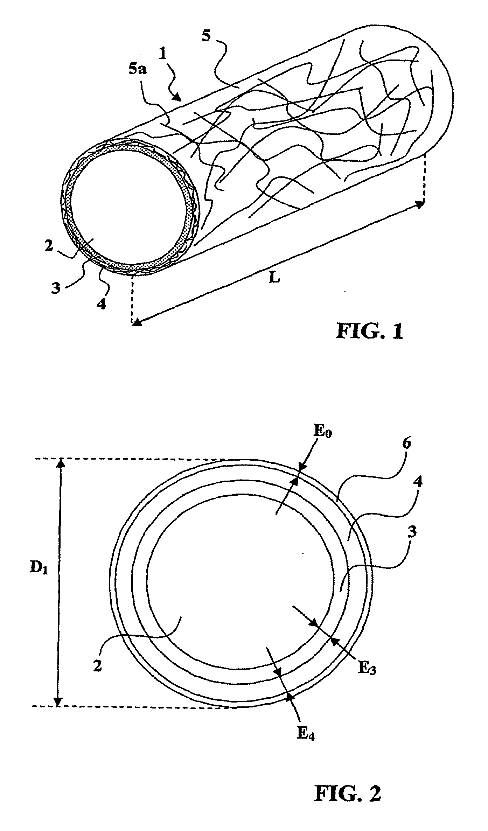

Les fils 2 et 3 du tableau ci-dessus montrent que la vitesse d'érosion est encore augmentée en présence d'une oxydation de la surface externe de la couche superficielle 4 de laiton en phase γ. La figure 2 illustre la présence d'une couche d'oxyde 6 d'épaisseur moyenne E₀.

Un effet inattendu de la couche superficielle 4 en laiton en phase γ fracturée, même présente en très faible quantité à la surface d'un fil diffusé, a été une meilleure touche électrique par rapport à un fil complètement diffusé en phase β et oxydé en surface. La touche électrique consiste, sur une machine Agie Evolution II, en un étincelage à très faible puissance, permettant seulement de localiser la pièce avec précision, et non pas de la découper.

On a également observé un encrassement moindre des contacts d'amenée de courant avec des fils à couche superficielle 4 en phase γ fracturée et sous-couche 3 en phase β, par rapport à des fils diffusés jusqu'à ce que la phase γ disparaisse complètement. On peut penser que la phase γ fracturée, même présente en faible quantité, permet de nettoyer les amenées de courant. Les éventuels résidus d'oxyde et de lubrifiant se déposant à la surface des amenées de courant pourraient être emportés par l'effet de raclage de la surface des fils, surface qui est irrégulière.

### Essai N° 6

On a ensuite recherché la possibilité de réaliser un fil selon l'invention ayant une âme en laiton CuZn37 (63 % de cuivre et 37 % de zinc), dans le but de produire un fil à plus faible coût, mais présentant néanmoins les avantages de l'invention.

Un fil satisfaisant a été obtenu en choisissant un traitement de diffusion relativement long à température relativement haute, de façon à produire une sous-couche 3 en laiton en phase β et une couche superficielle 4 en phase γ fracturée.

Pour cela, une ébauche en laiton CuZn37 a été revêtue de 9 µm de zinc sur un diamètre de 0.827 mm, puis traitée dans un four, sous air, selon une rampe de montée en température depuis l'ambiante jusqu'à 320°C à raison de + 0.5°C/min, un palier de 11 h à 320°C, une rampe de descente de 320°C jusqu'à l'ambiante à raison de - 0.5°C/min. Ensuite, un tréfilage a réduit le diamètre D₁ jusqu'à 0.25 mm, et le fil a subit un recuit continu de détente en ligne avant bobinage.

Pour comparer les effets obtenus selon l'invention, on a réalisé des échantillons de fils selon le procédé décrit dans le document US 5,945,010 :
- prendre une ébauche de laiton CuZn37 (63 % de cuivre et 37 % de zinc) ;
- réaliser un revêtement de zinc, d'épaisseur 6 µm sur un diamètre de 0,9 mm ;
- réaliser un traitement thermique au four, à 17.7°C, sous air, pour transformer par diffusion le zinc en un laiton en phase γ, sans former de quantité appréciable de phase β ;
- tréfiler en 0,25 mm, effectuer un recuit continu de détente avant le bobinage.

Par rapport à un fil d'électroérosion traditionnel en laiton nu, ce fil selon le document US 5,945,010 présentait des avantages à puissance d'usinage réduite, mais on a constaté que ces avantages disparaissaient quand on augmentait la puissance d'usinage par électroérosion.

Un essai complémentaire a consisté à augmenter l'épaisseur moyenne de la couche superficielle 4 en laiton γ fracturée, par une augmentation d'épaisseur du revêtement de zinc. Mais le fil obtenu s'est avéré fragile, et n'était pas utilisable dans les machines d'électroérosion qui plient le fil lors d'un ré-enfilage automatique.

On a ensuite comparé, dans les mêmes conditions opératoires, les vitesses d'érosion maximales du fil à âme 2 en laiton CuZn37 et couche superficielle 4 en laiton γ fracturée selon le document US 5,945,010, et du fil selon l'invention à âme 2 en laiton CuZn37 à sous-couche 3 de laiton β et couche superficielle 4 de laiton γ fracturée :

| Fil | CuZn37 + couche γ fracturée | CuZn37 + couche β + couche γ fracturée |
|---|---|---|
| Vitesse d'érosion | 119 mm²/min | 120,5 mm²/min |

En présence de la sous-couche 3 intermédiaire en laiton β, le fil s'est avéré moins fragile à la flexion. On a ainsi pu augmenter l'épaisseur totale de la couche d'usure du fil.

La vitesse maximale d'érosion du fil à âme en laiton CuZn37 était améliorée, et il n'a pas été constaté de rupture prématurée du fil.

La présente invention n'est pas limitée aux modes de réalisation qui ont été explicitement décrits, mais elle en inclut les diverses variantes et généralisations contenues dans le domaine des revendications ci-après.

## Revendications

1. Fil électrode (1) pour usinage par électroérosion comprenant :
- une âme (2) en cuivre, en alliage de cuivre, ou en laiton,
- un revêtement en laiton,
**caractérisé en ce que** le revêtement en laiton comprend la superposition :
- d'une sous-couche (3) en laiton en phase β, et
- d'une couche superficielle (4) à structure en laiton en phase γ fracturée qui laisse apparaître du laiton en phase β dans les fractures (5a).

2. Fil électrode selon la revendication 1, **caractérisé en ce que** du laiton en phase β remplit au moins en partie les fractures (5a) de la couche superficielle (4) en laiton en phase γ.

3. Fil électrode (1) selon l'une des revendications 1 ou 2, **caractérisé en ce que** la sous-couche (3) en laiton en phase β est continue.

4. Fil électrode selon l'une quelconque des revendications 1 à 3, **caractérisé en ce que** la couche superficielle (4) en laiton en phase γ fracturée a une épaisseur (E₄) inférieure à 8 % du diamètre (D₁) du fil, de préférence inférieure à 5 % du diamètre (D₁) du fil.

5. Fil électrode selon l'une quelconque des revendications 1 à 4, **caractérisé en ce que** la sous-couche (3) en laiton en phase β a une épaisseur (E₃) comprise entre 5 % et 12 % du diamètre (D₁) du fil.

6. Fil électrode selon l'une des revendications 4 ou 5, **caractérisé en ce que** l'épaisseur cumulée (E₃ + E₄) de la couche superficielle (4) en laiton en phase γ fracturée et de la sous-couche (3) en laiton en phase β est inférieure à 10 % environ du diamètre (D₁) du fil électrode.

7. Fil électrode selon la revendication 6, **caractérisé en ce que** la couche superficielle (4) en laiton en phase γ fracturée a une épaisseur (E₄) d'environ 2 % du diamètre (D₁) du fil, et la sous-couche (3) en laiton en phase β a une épaisseur (E₃) d'environ 6 % du diamètre (D₁) du fil.

8. Fil électrode selon l'une quelconque des revendications 1 à 7, **caractérisé en ce que** la surface externe de la couche superficielle (4) en laiton en phase γ est oxydée, de couleur sombre.

9. Fil électrode selon l'une quelconque des revendications 1 à 7, **caractérisé en ce que** la surface externe de la couche superficielle (4) en laiton en phase γ du fil est oxydée, mais présente néanmoins un aspect brillant, pouvant réfléchir la lumière.

10. Fil électrode selon l'une quelconque des revendications 1 à 7, **caractérisé en ce que** l'épaisseur moyenne (E₀) de la couche d'oxyde (6), mesurée par dissolution sélective, est comprise entre 100 nm et 250 nm environ.

11. Fil électrode selon l'une quelconque des revendications 8 à 10, **caractérisé en ce que** la couche d'oxyde (6) est constituée essentiellement d'oxyde de zinc.

12. Fil électrode selon l'une quelconque des revendications 1 à 11, **caractérisé en ce que** l'âme (2) est en laiton à teneur en zinc inférieure à 40 %.

13. Fil électrode selon la revendication 12, **caractérisé en ce que** l'âme (2) est en laiton à 20 % de zinc.

14. Fil électrode selon l'une quelconque des revendications 1 à 11, **caractérisé en ce que** l'âme (2) est en alliage CuZn37, à teneur en zinc d'environ 37 %.

15. Fil électrode selon l'une quelconque des revendications 1 à 11, **caractérisé en ce que** l'âme (2) est en cuivre.

16. Procédé de réalisation d'un fil électrode selon l'une quelconque des revendications 1 à 15, **caractérisé en ce qu'**il comprend les étapes suivantes :
a) prévoir une âme (2) en cuivre ou en laiton,
b) recouvrir l'âme (2) d'une couche de zinc par voie électrolytique, pour réaliser une pré-ébauche,
c) soumettre éventuellement la pré-ébauche à un premier tréfilage,
d) recuire la pré-ébauche tréfilée au four à une température comprise entre 200°C et 400°C environ et pendant une durée de 2h à 40h environ, en choisissant la température et la durée de façon à produire, par diffusion entre le zinc de la couche de couverture et le cuivre ou laiton de l'âme (2), une ébauche ayant une sous-couche (3) en laiton en phase β et une couche superficielle (4) en laiton en phase γ oxydée en surface,
e) soumettre l'ébauche ainsi diffusée à un second tréfilage à froid, pour l'amener au diamètre final (D₁) et de façon à fracturer la couche superficielle (4) en laiton en phase γ.

17. Procédé selon la revendication 16, **caractérisé en ce que** le second tréfilage réalise une réduction de diamètre comprise entre 40 % et 78 % environ.

18. Procédé selon l'une des revendications 16 ou 17, **caractérisé en ce que** le premier tréfilage réalise une réduction de diamètre comprise entre 40 % et 60 % environ.

19. Procédé selon l'une quelconque des revendications 16 à 18, **caractérisé en ce que** l'étape d) de recuit s'effectue au four à une température et pendant une durée choisies de façon que l'épaisseur moyenne (E₀) de la couche d'oxyde (6), mesurée par dissolution sélective sur le fil électrode après l'étape e), soit comprise entre 100 nm et 250 nm environ.

20. Procédé selon l'une quelconque des revendications 16 à 19, **caractérisé en ce que** l'étape d) de recuit s'effectue à l'air, produisant une oxydation de la surface externe de la couche superficielle (4) en laiton en phase γ.

21. Procédé selon l'une quelconque des revendications 16 à 19, **caractérisé en ce que** l'étape d) de recuit s'effectue en limitant l'oxydation par emballage de la pré-ébauche dans une enveloppe étanche ou semi-étanche.

## Claims

1. Electrode wire (1) for electrical discharge machining, comprising :
- a core (2) made of copper, copper alloy or brass,
- a brass coating,
**characterized in that** the brass coating comprises the superposition :
- of a β-brass sublayer (3), and
- of a surface layer (4) with a fractured γ-brass structure which reveals β-brass in the fractures (5a).

2. Electrode wire according to claim 1, **characterized in that** β-brass at least partially fills the fractures (5a) in the γ-brass surface layer (4).

3. Electrode wire (1) according to one of claims 1 or 2, **characterized in that** the β-brass sublayer (3) is continuous.

4. Electrode wire according to any one of claims 1 to 3, **characterized in that** the fractured γ-brass surface layer (4) has a thickness (E₄) less than 8% of the diameter (D₁) of the wire, preferably less than 5% of the diameter (D₁) of the wire.

5. Electrode wire according to any one of claims 1 to 4, **characterized in that** the β-brass sublayer (3) has a thickness (E₃) ranging between 5% and 12% of the diameter (D₁) of the wire.

6. Electrode wire according to one of claims 4 or 5, **characterized in that** the combined thickness (E₃ + E₄) of the fractured γ-brass surface layer (4) and of the β-brass sublayer (3) is less than about 10% of the diameter (D₁) of the electrode wire.

7. Electrode wire according to claim 6, **characterized in that** the fractured γ-brass surface layer (4) has a thickness (E₄) of about 2% of the diameter (D₁) of the wire, and the β-brass sublayer (3) has a thickness (E₃) of about 6% of the diameter (D₁) of the wire.

8. Electrode wire according to any one of claims 1 to 7, **characterized in that** the external surface of the γ-brass surface layer (4) is oxidized, of dark color.

9. Electrode wire according to any one of claims 1 to 7, **characterized in that** the external surface of the γ-brass surface layer (4) of the wire is oxidized, but nonetheless has a bright appearance able to reflect light.

10. Electrode wire according to any one of claims 1 to 7, **characterized in that** the average thickness (E₀) of the oxide layer (6), measured by selective dissolution, ranges between about 100 nm and about 250 nm.

11. Electrode wire according to any one of claims 8 to 10, **characterized in that** the oxide layer (6) essentially consists of zinc oxide.

12. Electrode wire according to any one of claims 1 to 11, **characterized in that** the core (2) is made of brass with a zinc content of less than 40%.

13. Electrode wire according to claim 12, **characterized in that** the core (2) is made of brass containing 20% zinc.

14. Electrode wire according to any one of claims 1 to 11, **characterized in that** the core (2) is made of CuZn37 alloy with a zinc content of about 37%.

15. Electrode wire according to any one of claims 1 to 11, **characterized in that** the core (2) is made of copper.

16. Process for producing an electrode wire according to any one of claims 1 to 15, **characterized in that** it involves the following steps :
a) providing a core (2) made of copper or of brass,
b) covering the core (2) with a layer of zinc using an electrolytic process in order to produce a preblank,
c) possibly subjecting the preblank to a first wire-drawing operation,
d) annealing the wire-drawn preblank in a furnace at a temperature ranging between about 200°C and about 400°C and for a time of about 2h to about 40h, choosing the temperature and the time so as to produce, as a result of diffusion between the zinc of the covering layer and the copper or brass of the core (2), a blank that has a β-brass sublayer (3) and a surface-oxidized γ-brass surface layer (4),
e) subjecting the blank thus diffused to a second, cold, wire-drawing operation in order to bring it to its final diameter (D₁) and in such a way as to fracture the γ-brass surface layer (4).

17. Process according to claim 16, **characterized in that** the second wire-drawing operation achieves a diameter reduction ranging between about 40% and about 78%.

18. Process according to one of claims 16 or 17, **characterized in that** the first wire-drawing operation achieves a diameter reduction ranging between about 40% and about 60%.

19. Process according to any one of claims 16 to 18, **characterized in that** the annealing step d) is performed in a furnace at a temperature and for a time that are chosen in such a way that the average thickness (E₀) of the oxide layer (6), measured by selective dissolution on the electrode wire after step e), ranges between about 100 nm and about 250 nm.

20. Process according to any one of claims 16 to 19, **characterized in that** the annealing step d) is performed in air, producing oxidation of the external surface of the γ-brass surface layer (4).

21. Process according to any one of claims 16 to 19, **characterized in that** the annealing step d) is performed while limiting oxidation by wrapping the preblank in a sealed or semi-sealed wrapper.

## Patentansprüche

1. Drahtelektrode (1) zur Bearbeitung mittels Funkenerosion enthaltend:
- eine Seele (2) aus Kupfer, aus einer Kupferlegierung oder aus Messing,
- eine Beschichtung aus Messing,
**dadurch gekennzeichnet, daß** die Beschichtung aus Messing die Überlagerung enthält:
- aus einer Unterschicht (3) aus Messing in Phase β, und
- aus einer Oberflächenschicht (4) mit einer aufgebrochenen Struktur aus Messing in Phase γ, die das Messing in der Phase β in den Durchbrechungen (5a) erscheinen läßt.

2. Drahtelektrode nach Anspruch 1, **dadurch gekennzeichnet, daß** das Messing in Phase β mindestens einen Teil der Durchbrechungen (5a) der Oberflächenschicht (4) aus Messing in Phase γ ausfüllt.

3. Drahtelektrode (1) nach einem der Ansprüche 1 oder 2, **dadurch gekennzeichnet, daß** die Unterschicht (3) aus Messing in Phase β durchgehend ist.

4. Drahtelektrode nach irgendeinem der Ansprüche 1 bis 3, **dadurch gekennzeichnet, daß** die aufgebrochene Oberflächenschicht (4) aus Messing in Phase γ eine Dicke (E₄) von weniger als 8 % des Durchmessers (D₁) des Drahtes hat, vorzugsweise geringer als 5 % des Durchmessers (D₁) des Drahtes.

5. Drahtelektrode nach irgendeinem der Ansprüche 1 bis 4, **dadurch gekennzeichnet, daß** die Unterschicht (3) aus Messing in Phase β eine Dicke (E₃) hat, die zwischen 5 % und 12 % des Durchmessers (D₁) des Drahtes liegt.

6. Drahtelektrode nach einem der Ansprüche 4 oder 5, **dadurch gekennzeichnet, daß** die kumulierte Dicke (E₃ + E₄) der aufgebrochenen Oberflächenschicht (4) aus Messing in Phase γ und der Unterschicht (3) aus Messing in Phase β kleiner ist als ungefähr 10 % des Durchmessers (D₁) der Drahtelektrode.

7. Drahtelektrode nach Anspruch 6, **dadurch gekennzeichnet, daß** die aufgebrochene Oberflächenschicht (4) aus Messing in Phase γ eine Dicke (E₄) von ungefähr 2 % des Durchmessers (D₁) des Drahtes hat und die Unterschicht (3) aus Messing in Phase β eine Dicke (E₃) von ungefähr 6 % des Durchmessers (D₁) des Drahtes hat.

8. Drahtelektrode nach irgendeinem der Ansprüche 1 bis 7, **dadurch gekennzeichnet, daß** die äußere Oberfläche der Oberflächenschicht (4) aus Messing in Phase γ oxidiert ist, in einer dunklen Farbe.

9. Drahtelektrode nach irgendeinem der Ansprüche 1 bis 7, **dadurch gekennzeichnet, daß** die äußere Oberfläche der Oberflächenschicht (4) aus Messing in Phase γ des Drahtes oxidiert ist, jedoch trotzdem eine glänzende Ansicht darstellt, die Licht reflektieren kann.

10. Drahtelektrode nach irgendeinem der Ansprüche 1 bis 7, **dadurch gekennzeichnet, daß** die mittlere Dicke (E₀) der Oxidschicht (6), die durch selektives Ablösen gemessen ist, zwischen ungefähr 100 nm und ungefähr 250 mm liegt.

11. Drahtelektrode nach irgendeinem der Ansprüche 8 bis 10, **dadurch gekennzeichnet, daß** die Oxidschicht (6) im wesentlichen aus Zinkoxid besteht.

12. Drahtelektrode nach irgendeinem der Ansprüche 1 bis 11, **dadurch gekennzeichnet, daß** die Seele (2) aus Messing ist, mit einem Gehalt an Zink von weniger als 40 %.

13. Drahtelektrode nach Anspruch 12, **dadurch gekennzeichnet, daß** die Seele (2) aus Messing ist mit 20 % Zink.

14. Drahtelektrode nach irgendeinem der Ansprüche 1 bis 11, **dadurch gekennzeichnet, daß** die Seele (2) aus einer Legierung CuZn37 ist, mit einem Gehalt an Zink von ungefähr 37 %.

15. Drahtelektrode nach irgendeinem der Ansprüche 1 bis 11, **dadurch gekennzeichnet, daß** die Seele (2) aus Kupfer ist.

16. Verfahren zur Herstellung einer Drahtelektrode nach irgendeinem der Ansprüche 1 bis 15, **dadurch gekennzeichnet, daß** es folgende Schritte hat:
a) Bereitstellen einer Seele (2) aus Kupfer oder aus Messing,
b) Beschichten der Seele (2) mit einer Schicht aus Zink mittels elektrolytischem Auftragen, um ein Vorprodukt zu schaffen,
c) eventuell Unterwerfen des Vorproduktes einem ersten Drahtziehen,
d) Glühen des drahtgezogenen Vorproduktes in einem Ofen bei einer Temperatur, die zwischen ungefähr 200°C und ungefähr 400°C liegt und während einer Dauer von ungefähr 2h bis ungefähr 40h, wobei man die Temperatur und die Dauer derart wählt, daß man durch Diffusion zwischen dem Zink der Deckschicht und dem Kupfer oder Messing der Seele (2) ein Rohteil herstellt, das eine Unterschicht (3) aus Messing in Phase β und eine Oberflächenschicht (4) aus Messing in Phase γ, die an der Oberfläche oxidiert ist, schafft,
e) Unterwerfen des so diffundierten Rohteiles einem zweiten Kalt-Drahtziehen, um es auf den endgültigen Durchmesser (D₁) zu bringen und derart, daß die Oberflächenschicht (4) aus Messing in Phase γ aufgebrochen wird.

17. Verfahren nach Anspruch 16, **dadurch gekennzeichnet, daß** das zweite Drahtziehen eine Verringerung des Durchmessers zwischen ungefähr 40 % und ungefähr 78 % realisiert.

18. Verfahren nach einem der Ansprüche 16 oder 17, **dadurch gekennzeichnet, daß** das erste Drahtziehen eine Verringerung des Durchmessers zwischen ungefähr 40 % und ungefähr 60 % realisiert.

19. Verfahren nach irgendeinem der Ansprüche 16 bis 18, **dadurch gekennzeichnet, daß** der Schritt d) des Glühens in einem Ofen bei einer Temperatur und während einer Dauer durchgeführt wird, die derart gewählt sind, daß die mittlere Dicke (E₀) der Oxidschicht (6), die durch selektives Ablösen von der Drahtelektrode nach dem Schritt e) gemessen wird, zwischen ungefähr 100 nm und ungefähr 250 nm liegt.

20. Verfahren nach irgendeinem der Ansprüche 16 bis 19, **dadurch gekennzeichnet, daß** der Schritt d) des Glühens unter Luft durchgeführt wird, was eine Oxidation der äußeren Oberfläche der Oberflächenschicht (4) aus Messing in Phase γ produziert.

21. Verfahren nach irgendeinem der Ansprüche 16 bis 19, **dadurch gekennzeichnet, daß** der Schritt d) des Glühens unter Begrenzung der Oxidation durch Einhüllen des Vorproduktes in einer dichten oder halbdichten Umhüllung durchgeführt wird.
